# DEMANDE DE BREVET EUROPEEN

(11) **EP 2 735 499 A1**
(43) Date de publication de la demande: **28.05.2014**
(21) Numéro de dépôt: 13193946.4
(22) Date de dépôt: 21.11.2013
(51) Int. Cl.: B62J 17/08

(54) **Protection pour vélo**

(30) Priorité: 22.11.2012 FR 1261102
(71) Demandeur: Sarfati, Arnaud, 78690 Les Essarts le Roi (FR)
(72) Inventeur: Sarfati, Arnaud, 78690 Les Essarts le Roi (FR)
(74) Mandataire: Gaillarde, Frédéric F. Ch.

(57) **Abrégé**

La présente invention se rapporte à une protection (1) pour vélo et autres cycles, comprenant une armature (2) en forme de boucle fermée réalisée à partir d'un matériau flexible pliable à l'a manière d'un 8, ladite boucle présentant une portion avant (2a), une portion arrière (2b) et deux portions latérales (2c), caractérisée en ce que la portion avant et la portion arrière sont reliées par au moins un tendeur présentant une longueur inférieure à la longueur des portions latérales de manière à assurer la formation par chacune desdites portions latérales d'un arceau correspondant.

## Description

La présente invention se rapporte à un dispositif de protection contre les intempéries de l'utilisateur d'un cycle, par exemple une bicyclette, ou un véhicule à deux ou trois roues actionnées par des pédales.

Le dispositif de protection peut bien évidemment également être utilisé comme protection contre le soleil.

Les intempéries, telles que la pluie ou la neige, constituent des obstacles majeurs pour un cycliste.

La solution est alors généralement de s'équiper de vêtements imperméables. De tels vêtements sont toutefois peu confortables et limitent grandement les mouvements, notamment la rotation de la tête pour surveiller les autres véhicules.

Par ailleurs, le cycliste prévoit rarement d'emmener ces vêtements avec lui et se retrouve dépourvu en cas de changement météorologique au cours de son trajet.

Pour tenter de résoudre ce problème, des solutions consistant à prévoir un capotage protecteur amovible autour du cycliste ont été développées.

On connaît ainsi des systèmes de protection comprenant une coque protectrice rigide, par exemple en plexiglas ou polycarbonate, disposée autour du vélo. Un telle coque occupe alors un volume relativement important et alourdit considérablement le vélo.

En outre, de tels systèmes ne sont pas pliables et ce volume est occupé même en cas de non-utilisation du système.

Il s'ensuit que de tels systèmes ne sont pas aisément transportables par le cycliste et sont donc également difficilement adaptables aux changements météorologiques au cours du parcours.

La coque rigide peut être remplacée par une toile transparente en matériau plastique, ce qui permet notamment de la rendre pliable et allège le dispositif. Cette toile est tendue sur une armature rigide fixée sur le vélo de manière amovible et lui alors donnant la forme souhaitée.

L'armature peut être réalisées à partir d'une paire d'arceaux associée à un système d'accroches sur le guidon et sur la tige de selle ou sur le porte bagage.

On notera que la fixation sur le guidon est peu pratique car cela déforme l'armature, et donc la toile de protection, lorsque le guidon est tourné. En outre, les fixations peuvent gêner l'accès aux freins, aux commandes de vitesses, etc.

L'armature peut également être pliable voire démontable. Cela entraîne souvent de nombreuses pièces détachées qui peuvent être perdues ou cassées, rendant la protection inutilisable.

En outre, même démonté, le nombre de pièces peut s'avérer trop important pour rendre le système aisément transportable par le cycliste.

Ces systèmes démontables requièrement un temps de montage / démontage non négligeable.

Ainsi, il existe un besoin pour un dispositif de protection simple à installer, aisément transportable et rangeable, ne présentant pas les inconvénients mentionnés précédemment.

Pour ce faire, la présente invention se rapporte à une protection pour vélo et autres cycles, comprenant une armature en forme de boucle fermée réalisée à partir d'un matériau flexible pliable à l'a manière d'un 8, ladite boucle présentant une portion avant, une portion arrière et des portions latérales, **caractérisée en ce que** la portion avant et la portion arrière sont reliées par au moins un tendeur présentant une longueur inférieure à la longueur des portions latérales de manière à assurer la formation par chacune desdites portions latérales d'un arceau correspondant.

Par portion avant et portion arrière, on entend la partie de l'armature qui s'étend respectivement avant et après le tendeur, la portion latérale étant celle qui forme l'arceau.

Par tendeur, on entend un élément de retenue et de tension apte à assurer la tenue des arceaux.

Ainsi en prévoyant une armature flexible et repliable associée à un tendeur latéral, la tenue de ladite armature en position dépliée est auto-assurée et optimisée.

En effet, en position dépliée, l'armature est destinée à former deux arceaux liés par la portion avant et la portion arrière. L'armature étant flexible, ces arceaux ont naturellement tendance à revenir vers une position sensiblement plane de l'armature. Les tendeurs latéraux assurent alors la reprise de ces efforts de ressort et maintiennent les arceaux.

En l'absence de tels tendeurs, ce sont des fixations de la protection sur le vélo qui devraient reprendre ces efforts et assurer la retenue de l'armature.

En outre, cela obligerait l'utilisateur à plier lui-même l'armature et à la maintenir pliée le temps de sécuriser les fixations correspondantes sur le vélo.

Ainsi, l'armature dépliée peut-être installée simplement et directement par-dessus le vélo sans contrainte particulièrement pour l'utilisateur.

A fins de protection, l'armature supportera bien évidemment une toile étanche, éventuellement transparente en tout ou partie. Cette toile pourra notamment être réalisée en matériau PVC, par exemple du PVC cristal, ou encore en toile nylon, de type Nylon Oxford ® par exemple.

La toile pourra également présenter des ouvertures d'aération (partie en mousse par exemple).

La toile de protection pourra également s'étendre latéralement au niveau des arceaux, et descendre jusqu'à rejoindre les tendeurs. Elle pourra ainsi également contribuer à la tenue des arceaux.

On notera également que l'armature pliable permet donc de replier la protection vélo et de la rendre aisément transportable et rangeable.

De manière avantageuse, l'armature est pliable en double 8.

Avantageusement, l'armature est une boucle continue.

Selon un mode de réalisation préféré, l'armature est réalisée à partir de fibres de verre.

Avantageusement, les fibres de verre sont continues.

L'armature pourra notamment être réalisée à partir d'un jonc en fibres de verre, présentant, à titre d'exemple un diamètre d'environ 5 mm pour une longueur périphérique d'environ 6 m.

Préférentiellement, la longueur du tendeur est réglable.

Préférentiellement encore, le tendeur est latéral.

Avantageusement, le tendeur est une bande de toile, notamment de toile PVC. Le tendeur pourra en outre comporter par exemple une bande réfléchissante de sécurité.

De manière complémentaire, le tendeur est démontable.

Avantageusement, la portion avant et / ou la portion arrière de l'armature présentent des moyens d'attache à une partie fixe du vélo. Tout type de fixation est envisageable. On privilégiera des fixations à longueur réglable afin de pouvoir les adapter sur tout type de vélo.

Concernant les points d'attache des moyens de fixation, on privilégiera des parties fixes du vélo, tel que la tige de selle, un élément de porte bagage, le fourreau de direction, etc.

En outre, l'armature peut servir de support pour divers accessoires, notamment de l'éclairage par exemple.

La présente invention sera mieux comprise à la lumière de la description détaillée qui suit en regard du dessin annexé dans lequel :
- La figure 1 est une représentation schématique d'une protection vélo selon l'invention,
- Les figures 2 à 6 sont des figures représentant les étapes de pliage / dépliage de la protection de la figure 1,
- La figure 7 est une représentation schématique de la protection de la figure 1 montée sur un vélo,

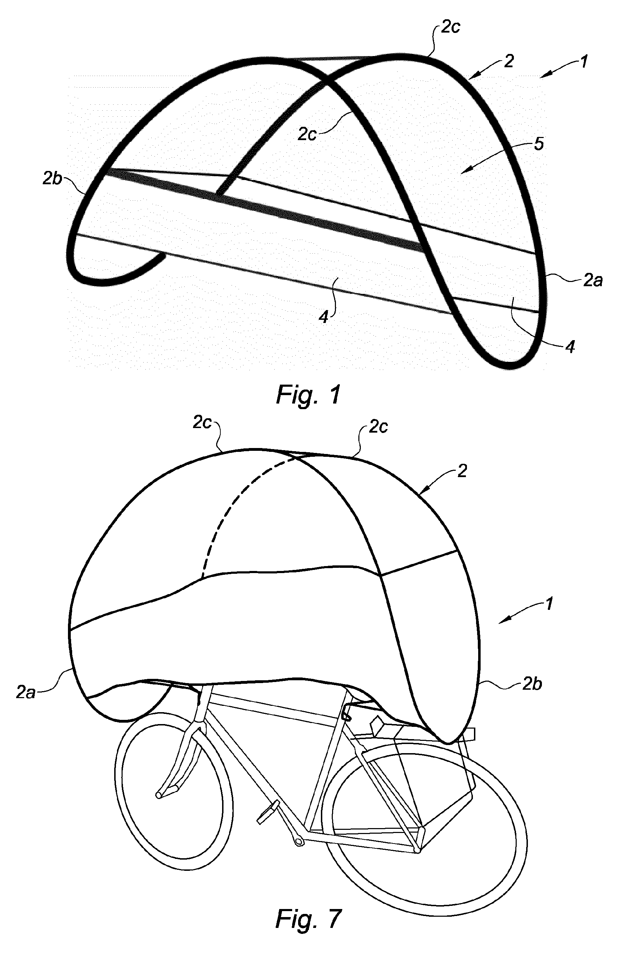

La figure 1 montre une protection 1 pour vélo selon l'invention en configuration dépliée.

Cette protection comprend une armature 2 souple formant une boucle continue fermée.

L'armature présente une portion avant 2a (destinée à être orientée vers l'avant du vélo), une portion arrière 2b (destinée à être orientée vers l'arrière du vélo), lesdites portions avant 2a et arrière 2b reliant deux portions latérales 2c.

Conformément à l'invention, la portion avant 2a et la portion arrière 2b sont reliées par deux tendeurs 4 latéraux se présentant chacun sous la forme d'une bande PVC.

Chaque tendeur possède une longueur inférieure à la longueur des portions latérales 2c, lesdites portions latérales 2c étant ainsi maintenues courbées de manière à chacune former un arceau.

A fins de protection, l'armature 2 supporte une toile PVC 5 imperméable. On notera que la toile s'étend également latéralement de part et d'autre de la protection 1 et descend notamment jusqu'au niveau des bandes tendeurs 4.

Comme mentionné précédemment, l'armature 2 est réalisée dans un matériau flexible, de type jonc de fibres de verre, et permet un pliage en 8, plus particulièrement en double 8.

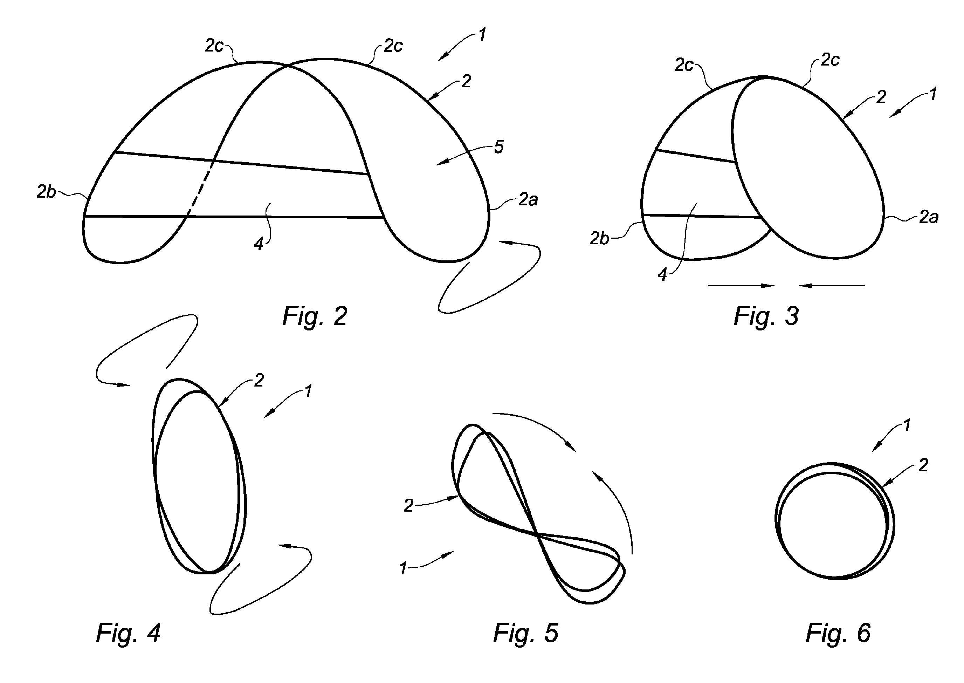

Les étapes de pliage sont représentées sur les figures 2 à 6.

Une première torsion (figure 2) sensiblement au niveau du milieu de l'armature 2 permet la formation d'un 8 présentant deux boucles qui sont ramenées l'une contre l'autre (figure 3).

C'est deux boucles subissent ensuite une deuxième torsion (figure 4) médiane permettant la formation d'une nouveau 8 dont les deux boucle sont à nouveau ramenées l'une contre l'autre (figure 5).

La protection pluie 1 ainsi repliée (figure 6) est particulièrement compacte et peut-être aisément rangée voire accrochées au vélo.

Une bande de maintien de type à bouclettes et à crochets permettra de maintenir la protection repliée. Tout autre type de maintien de l'armature 2 est bien évidemment également envisageable.

Le pliage en 8 permet de conserver l'armature dans un état de tension. Elle forme alors une sorte de ressort et permet le dépliage rapide et facile de la protection. En relâchant l'armature 2, celle-ci a naturellement tendance à se déplier (en raison des torsions appliquées et du pliage en 8) pour retrouver sa forme plane.

Les tendeurs 4 assurent alors la formation des arceaux et la protection 1 est immédiatement prête à être montée sur le vélo.

L'ensemble est montré sur la figure 7.

Afin de pouvoir être monté sur le vélo, la protection 1 est équipée de fixations avant et arrière adaptées.

Ces fixations sont reliées, d'une part, à l'armature 2, et d'autre part, à une partie du vélo, préférentiellement une partie fixe, du type porte bagage ou tige de selle, pour l'arrière, et du type fourreau de fourche de direction pour l'avant.

Tout type de fixation est envisageable. On pourra notamment utiliser des fixations de type collier de serrage, plus particulièrement à serrage rapide, à grenouillère, ou autre.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Protection (1) pour vélo et autres cycles, comprenant une armature (2) en forme de boucle fermée réalisée à partir d'un matériau flexible pliable à l'a manière d'un 8, ladite boucle présentant une portion avant (2a), une portion arrière (2b) et deux portions latérales (2c), **caractérisée en ce que** la portion avant et la portion arrière sont reliées par au moins un tendeur (4) présentant une longueur inférieure à la longueur des portions latérales de manière à assurer la formation par chacune desdites portions latérales d'un arceau correspondant.

2. Protection (1) selon la revendication 1, **caractérisée en ce que** l'armature est pliable en double 8.

3. Protection (1) selon l'une quelconque des revendications 1 à 3, **caractérisée en ce que** l'armature (2) est une boucle continue.

4. Protection (1) selon l'une quelconque des revendications 1 ou 2, **caractérisée en ce que** l'armature (2) est réalisée à partir de fibres de verre.

5. Protection (1) selon la revendication 4, **caractérisé en ce que** les fibres de verre sont continues.

6. Protection (1) selon l'une quelconque des revendications 1 à 5, **caractérisée en ce que** la longueur du tendeur (4) est réglable.

7. Protection (1) selon l'une quelconque des revendications 1 à 6, **caractérisée en ce que** le tendeur (4) est latéral.

8. Protection (1) selon l'une quelconque des revendications 1 à 7, **caractérisée en ce que** le tendeur (4) est une bande de toile, notamment de toile PVC.

9. Protection (1) selon l'une quelconque des revendications 1 à 8, **caractérisé en ce que** le tendeur (4) est démontable.

10. Protection (1) selon l'une quelconque des revendications 1 à 9, **caractérisée en ce que** la portion avant (2a) et / ou la portion arrière (2) de l'armature présentent des moyens d'attache à une partie fixe du vélo.
